# EUROPEAN PATENT APPLICATION

(11) **EP 1 316 656 A1**
(43) Date of publication of application: **04.06.2003**
(21) Application number: 01204780.9
(22) Date of filing: 28.11.2001
(51) Int. Cl.: E04H 12/34, E04H 12/18, E04H 12/20

(54) **Pole and method for erecting a pole**

(71) Applicant: Turbowinds N.V./S.A., 3090 Overijse (BE)
(72) Inventor: Croes, Valère, 3500 Hasselt (BE)
(74) Representative: Plucker, Guy

(57) **Abstract**

A segmented pole comprises a number of segments (2,3), each (apart from the bottom one), being connected to a lower segment (2) at a pivot point (4) which joins two segments (2,3), each segment having two oppositely from the pivot point arranged parts (7, 8). Each segment also has a transversal part (9) extending transverse to the longitudinal direction of the segment. To the outer ends of one of the parts (7,8) and the transversal part (9) cables are connectable (or connected). Such a construction in particular when the arrangement comprises four or more segment allows to erect a segmented pole with little forces by erecting the pole segment by segment, while subsequent segment are attached.

## Description

### (Field of the invention)

The invention relates to a segmented pole comprising an arrangement of at least one, lower, longitudinal segment and a further, upper, second longitudinal segment, the second longitudinal segment being positioned on top of the first longitudinal segment.

The invention also relates to a method for erecting a segmented pole comprising an arrangement of at least one, lower, segment and a further, higher, second segment, the second segment being positioned on top of the first segment.

Such poles are used for e.g. poles having wind turbines or radio transmission devices on top of the pole for telephone poles and for anemometers.

### (Background of the invention)

Traditionally poles for wind turbines or for transmission purposes etc. are made either by building the pole from the ground up or by making a pole in one piece laying on the ground and then tilting the pole or by erecting or building a first segment, and then hoisting or building a second segment on top of the first. Although such poles and techniques for making poles are often useful, they do not enable to make a sturdy, relatively long pole in an easy manner. Often they are limited in the height which can be obtained, for instance when use is made of a technique in which a pole is made and erected in one piece. When a single piece pole is tilted there is a considerable chance of buckling, i.e. that the forces exerted on the pole during tilting cause the pole to buckle. If a larger height is to be obtained large and expensive machinery and/or ground works such as very heavy foundations are needed.

Making sturdy poles in a relatively easy and cost-effective manner is in particular important for sites or regions in which poles should be erected at a relatively low cost and be relatively easily erectable and dismountable.

### (Summary of the invention)

To this end the pole in accordance with the invention is characterised in that the first and second segment of the arrangement are joined at a joining pivot point situated at or near a free end of the first longitudinal segment and at a intermediate point of the second longitudinal segment, whereby, seen from the pivot point the second segment comprises a first part and a second part, said parts extending along the longitudinal direction at opposite sides of the pivot point, the first part being, in upright position, abutting or aligned with the first segment, the second segment then extending upwards from the first segment, the second segment being provided with a transversal part, extending in a direction perpendicular to the longitudinal direction and attached to the second segment at or near the pivot point, the first part and the transversal part having at their free ends with means for attaching cables to it.

The arrangement having a pivot point, a first part and a transversal part and means for attaching cables enables with relatively small forces and thus requiring relatively light equipment to erect a segmented pole.

Preferably the pole comprises an arrangement of more than two segments, preferably four or more segments, wherein each segment is joined with a further segment at a pivot point as described above.

Such an arrangement allows for the first and second segment to be put upright, or nearly upright while the further segments do not have to be hoisted, when the arrangement of the first and second segment is put in place, and shored with shore cables, the third segment can be pivoted into an upright position etc. etc.. This allows to erect a high pole, while still exerting only a moderate force and at relatively small distances from the pole. This is in particular of importance, not only in the circumstances as already indicated above, but also in places (such as mountainous terrain) in which there is only very limited space to operate.

The invention does not only make it relatively easy to erect poles but also to bring them down, or to replace them, or for inspection or overhaul of whatever device is positioned on top of the pole.

Preferably the segments have a length of between 3 to 9 meters, smaller segment can be assembled by other techniques, while larger segments may be too heavy.

Preferably the length of the first part lies between 1/10th and half of the length of the second part.

Too small a length of the first part would require a relatively large force to start the pivoting action, too large a length needlessly adds length to the segment, thereby increasing the moment.

Preferably the length of the transversal part lies between half of the length of the first part and approximately the length of the first part. Preferably the length of the transversal part equals approximately the length of the first part.

The transversal part functions as follows: The force which drives the pivoting action acts during the first stage of pivoting upon the free end of the first part, however during a later stage of the pivoting action the force acts upon the free end of the transversal part, therefore preferably around an angle of 45° to 30° the point at which the force acts is changed from the free end of the first part to the free end of the transversal part.

These and other objects of the invention will be apparent from and elucidated with reference to the embodiments described hereinafter.

### (Brief description of the drawings)

A few exemplary embodiments of the display device according to the invention will be described with reference to the accompanying drawing, in which
Fig. 1 shows schematically a segmented pole having two segments in accordance with the invention in a partly erected position.
Fig. 2 shows the segmented pole of figure 1 in a more upright position
Fig. 3 shows the pole of figure 2 with a third segment attached to it
Fig. 4 shows the pole of figure 3 with a fourth segment attached to it
Fig. 5 shows in more detail and in perspective the segmented pole of figure 4
Fig. 6 shows in more detail a part of figure 5
Figs 7 to 11 illustrate the construction of a pole having seven segments in accordance with the invention
Figures 12a and 12b illustrate a kit for a segment for a segmented pole and/or method in accordance with the invention
The figures are not drawn to scale. In each of the Figures, corresponding parts generally bear the same reference numerals.

### Detailed description of embodiments

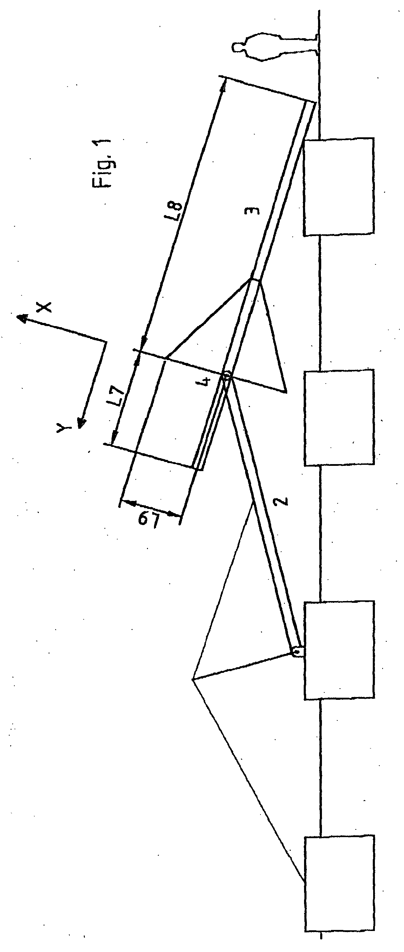

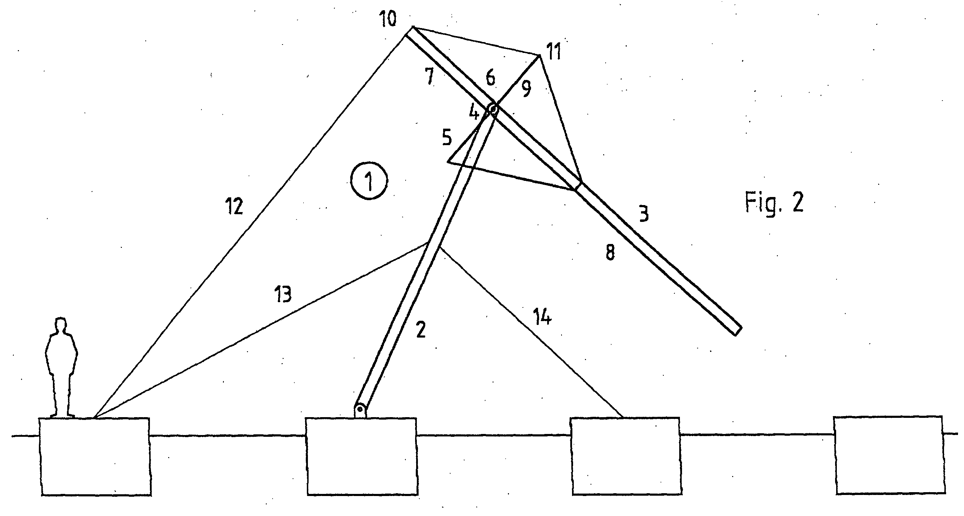

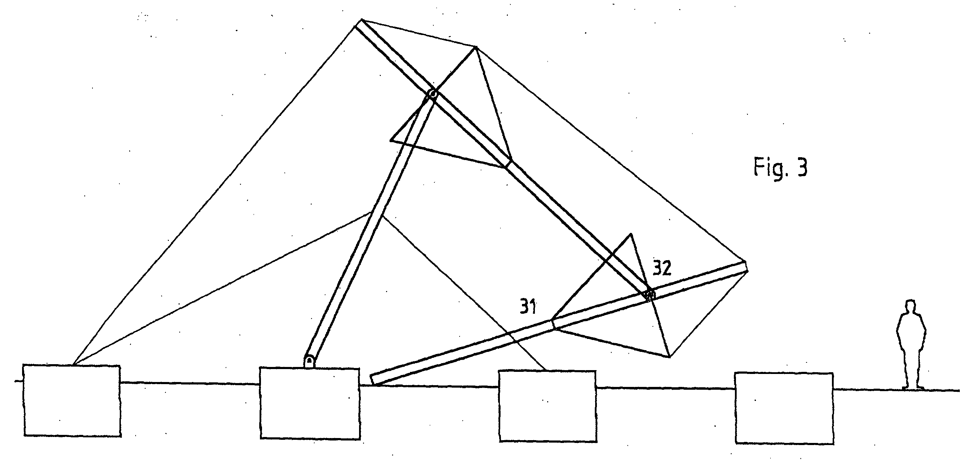

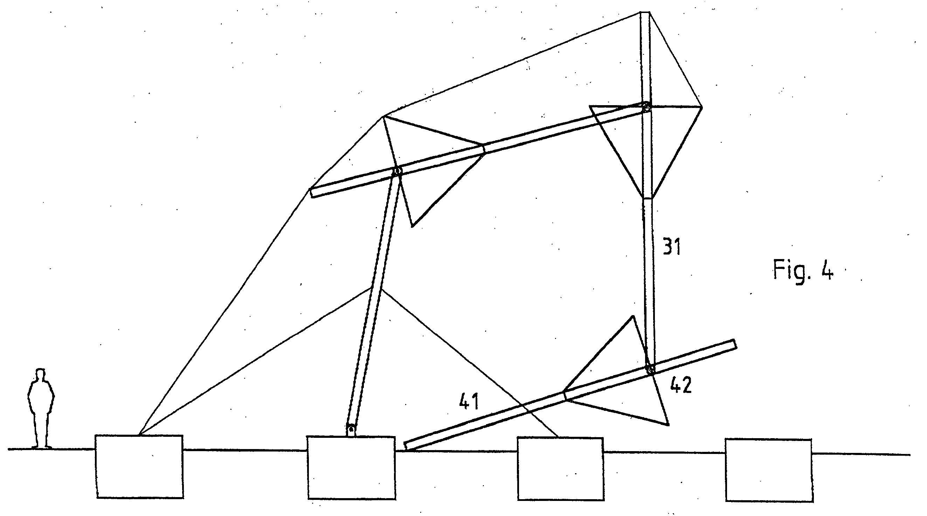

Figs 1 and 2 show a pole with two segments in accordance with the invention in a non-erected (fig. 1) and a partly erected (fig. 2 ) position. For clarity sake some of the numerals are given in figure 1 and some in figure 2, where in figure 1 also the lengths of some parts are indicated. Segmented pole comprises an arrangement 1 of at least one, lower, longitudinal segment 2 and a further, upper, second longitudinal segment 3. The second longitudinal segment 3 is positioned on or near the top (free end) of the first longitudinal segment. The first and second segments 2,3 are joined at a joining pivot point 4 situated at or near a free end 5 of the first longitudinal segment 2 and at a intermediate point 6 of the second longitudinal segment, whereby, seen from the pivot point 4 the second segment comprises a first part 7 and a second part 8, said parts extending (along length l₇ and l₈ respectively) along the longitudinal direction (y) at opposite sides of the pivot point 4. The first part 7 abuts, as will be explained in respect of further drawings in upright position i.e. when arrangement 1 is completely pivoted, the first segment 2. In upright position the second segment extends upwards from the first segment. The second segment is provided with a transversal part 9. Said transversal part 9 extends in a direction (x) perpendicular to the longitudinal direction (y) and is attached to the second segment 3 at or near the pivot point 4. The length l₉ of this transversal part is indicated. The first part and the transversal part have at or near their free ends 10, 11 means for attaching cables to it, of which cable 12 is shown. In this figure 1 the first segment is only partly erect and cables 13 and 14 are attached to it. Under 'cables' is understood within the framework of the invention also lines and ropes. As can be seen schematically in figure 1 it is easy to attach the second segment 3 to the first segment in the first stage. The first segment is then hoisted and the second segment is partly pivoted using the cables until the situation as schematically indicated in figure 2 is obtained. At that stage it is easy to attach a third segment 31 with a pivot point 32 as schematically shown in figure 3. Fig. 4 shows the pole of figure 3 with a fourth segment 41 attached to it at a pivot point 42.

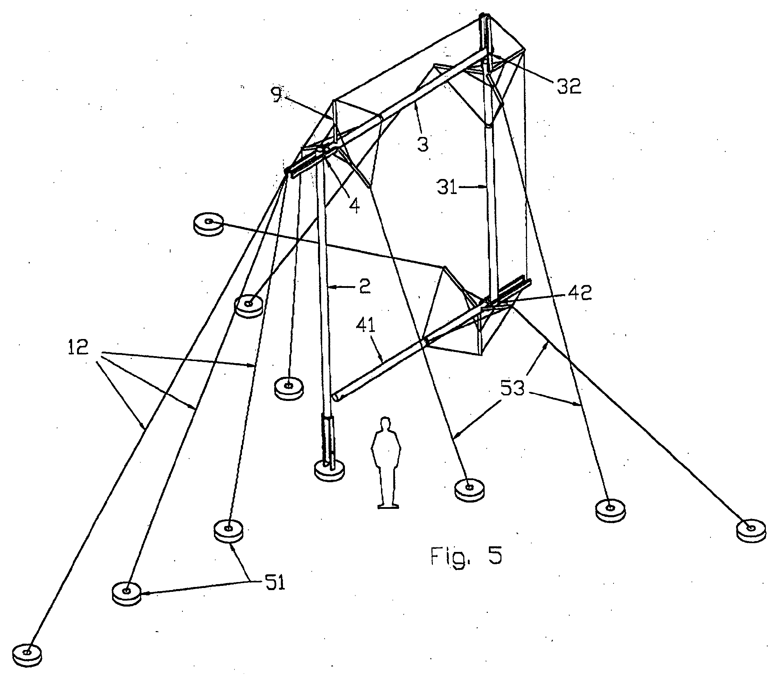

Figure 5 shows in more detail and in perspective the segmented pole of figure 4. In this figure foundation blocks 51 are also shown. The segment 2 is upright, segment 3 is about to be pivoted around pivot point 4. As shown in this figures preferably side-way shore cables 53 are also in place. These shore cables prevent the pole from falling to either side of the pivot plane, the pivot plane being the plane in which the segment 3, 31 and 41 are pivoted. Preferably the foundation blocks are arranged along three axes, one in the pivot plane, the other two at angles of 120° to the pivot plane.

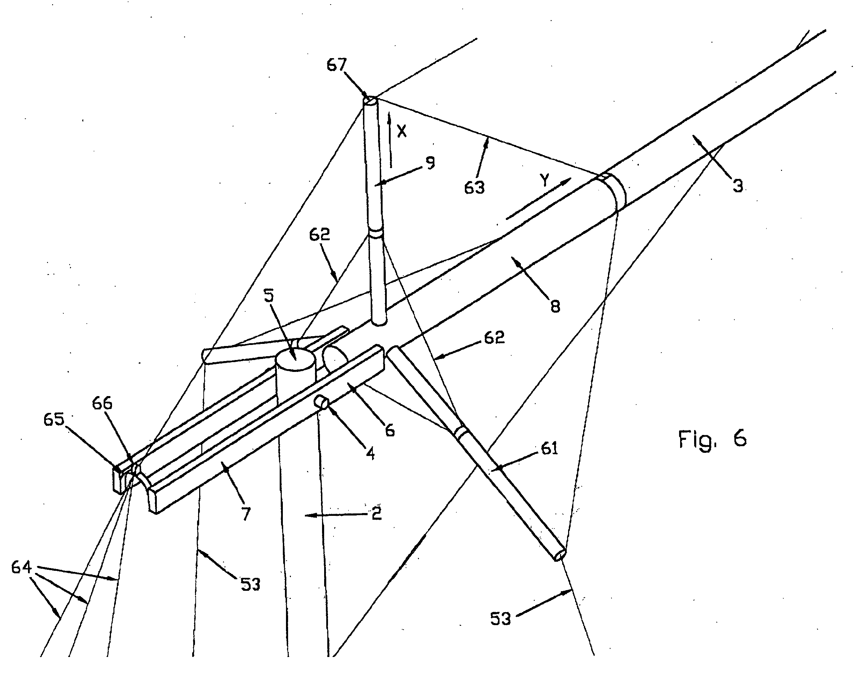

Figure 6 shows in more detail a part of figure 6. The first 2 and second 3 segments are joined at a joining pivot point 4 situated at or near a free end 5 of the first longitudinal segment 2 and at or near an intermediate point 6 of the second longitudinal segment 3, whereby, seen from the pivot point 4 the second segment comprises a first part 7 and a second part 8, said parts extending along the longitudinal direction (y) at opposite sides of the pivot point 4. The sideways shore cables 53 are also shown (see figure 5). The second segment 3 comprises, apart from transversal part 9 lying in the pivoting plane (the x-y- plane) and arranged at or near (in this case near, since it is situated at a small distance from the pivot point 4), and two further transversal parts 61 at 120° of transversal part 9. The transversal parts 9 and 61 are preferably interconnected by shore cables 62 to each other to provide rigidity to the construction and preferably also to part 8 of the segment 3 via shore cables 63. Pulling at cables 64 will make segment 3 pivot around point 4. In an initial stage the inner most cables will do the pulling, pulling at attachment point 65 of part 7, located near the free end of part 7. The other cables including sideway shore cables 53 will be kept under appropriate tension to ensure safe operation. In this preferred embodiment the free end of part 7 is provided with bracket 66 to guide cables. When segment 3 is pivoted partway, a pulling force will also be exerted on attachment point 67 of part 9 via a more outwardly situated cable. In this manner forces are distributed and too high a moments on the construction during pulling are avoided. When segment 3 is completely upright it abuts segment 2. In embodiments the part 7 can be left unattached to segment 2, for instance in set-ups in which one wants to be able to assemble and disassemble the pole quickly without having to climb the pole. In other embodiment the part 7 may be fastened to segment 2 to provide extra security. It may also be within preferred embodiment of the invention that part 7 and segment 2 are attached to each other by means of a 'snap-on' or 'click-on' arrangement in which application of some force will 'snap-on' the part 7 on segment 2, and releasing of said part is also possible by application of force in the opposite direction. Alternatively the end of part 7 comprises an arrangement in which from below, for instance by means of ropes, an element of part 7 can be partially clamped to and freed from attachment to segment 2. In any way once segment 3 is pivoted in place, the structure as far as completed is secured by means of tensioning the cables and the next segment can be pivoted.

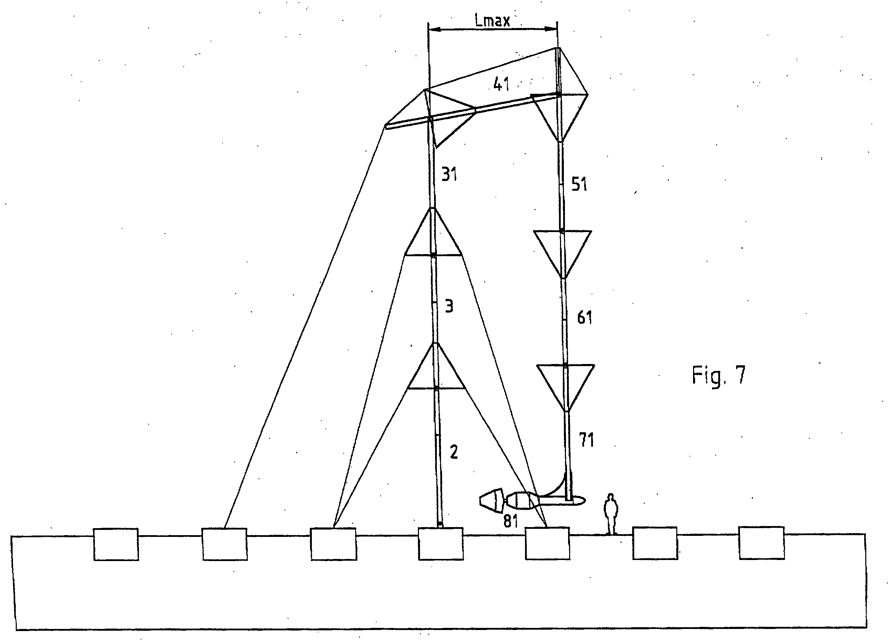

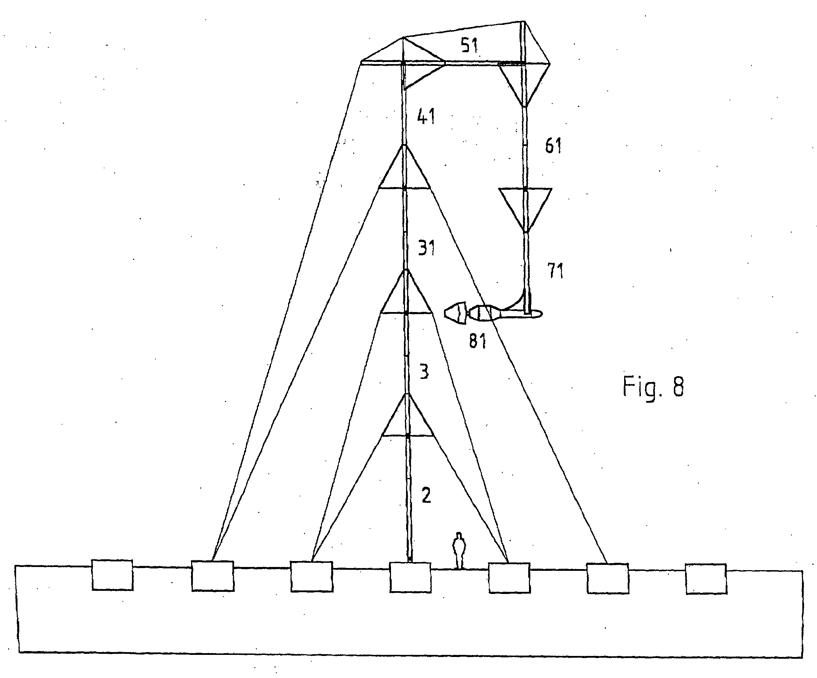

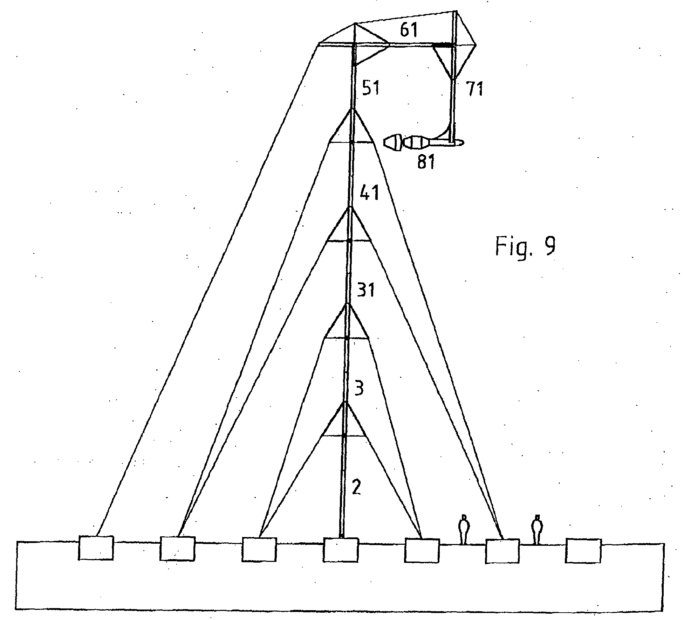

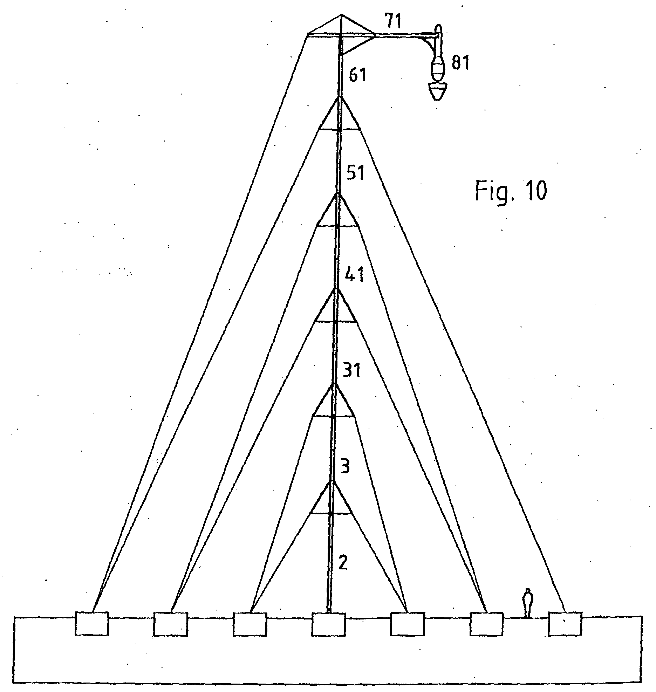

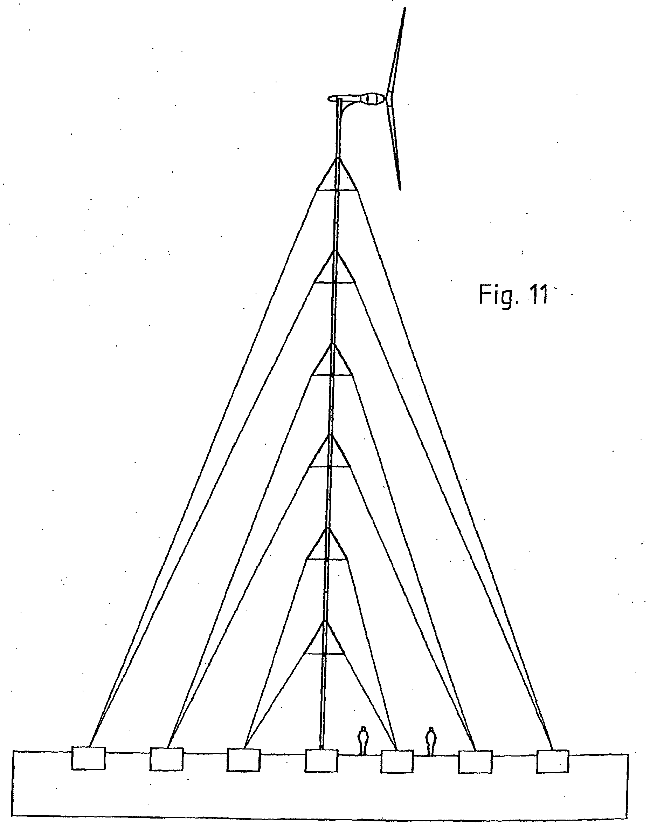

This sequential pivoting and securing is illustrated in figures 7 to 11. In figure 7 three segments (2, 3 and 31) are in an upright position, segment 41 is being pivoted, and segment 51, 61, 71 and wind turbine 81 are attached to the pivot point of segment 41. In Figure 8 segment 41 has been pivoted and pivoting of segment 51 is commenced, in figure 9 segment 51 is pivoted and pivoting of segment 61 is commenced etc. Figure 11 shows the completed structure. It is remarked that in this figure the two blades of the wind turbine are shown. They have, for simplicity sake, not been drawn in the other figures, but are in this preferred embodiment attached to the wind turbine right from the start, i.e. in the position with the blades perpendicular to the plane of drawing as shown in figure 7. As can be seen in figure 5 in this preferred embodiment the shore cables 53 are positioned under angles of 120⁰ which leaves enough room for the wind turbine to be lifted with the blades attached to it. It is remarked that the greatest forces are exerted in the situation as shown in figure 7, i.e. when roughly half of the segments are in upright position. The largest weight is then suspended. In preferred embodiments, the central and near-central segment may differ from segments nearer to the bottom part or top part of the pole to provide for increased strength or increased ease of lifting. Such differences may be an increased strength of the segment itself, or an increased strength of the transversal part 9 when the strength of the segments could be a limiting aspect, or a relatively more elongated transversal part 9 or first part 7, whereby with the same (work-)force larger moments can be made and thus more weight can be lifted. In embodiments the segments could be provided with more than one possible pivot point, e.g. a standard pivot point with a relatively small-length first part 7, which can be used for the first and last one, two or three segments of the pole, and a further pivot point, closer to the middle of the segment and thus with a longer part 7, for halfway or near halfway segments, halfway meaning halfway up the height of the pole. Likewise the length of the transversal part 9 could be to some extent adjustable. Having two pivot points would of course mean that for the halfway segments have a smaller effective length, thus requiring more segments on average for a particular height of pole, or with the same number of segments a slightly smaller pole, but the advantage of being able to erect the pole with the at the site available workforce or equipment could well be much more important than the disadvantage of having a slightly smaller pole.

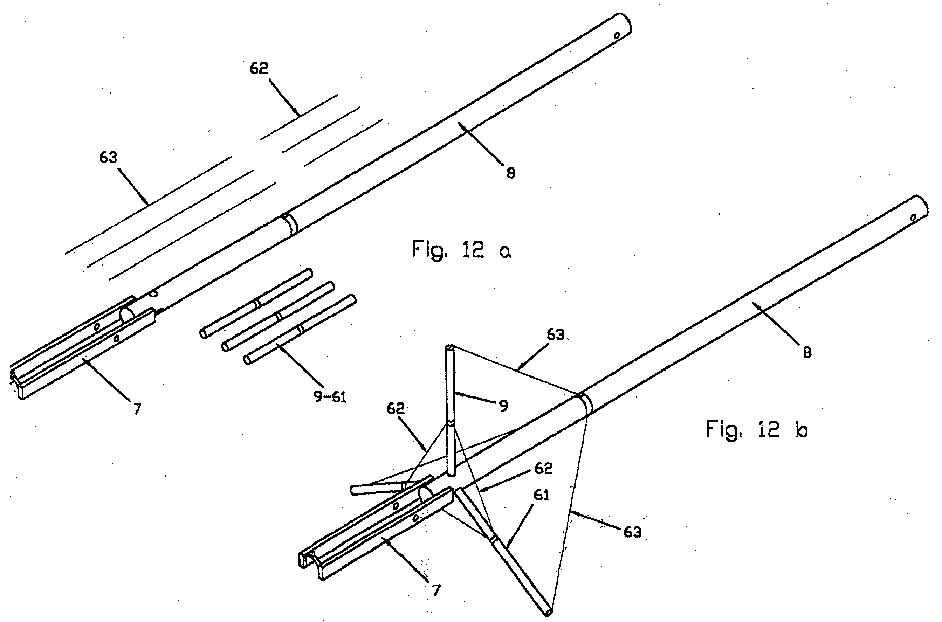

Figures 12a and 12b show a kit for a segment for a pole in accordance with the invention. The kit comprises the first part 7 attached to the second part 8, the transversal part 9 and transversal parts 61 to be attached to the second part, cables 62 to by arranged between the transversal parts 9 and 61 and cables 63 to be arranged between the free ends of the transversal parts and the second part 8. Such a kit can be very advantageously be used for a pole in accordance with the invention, since it can be easily transported to any position and be made into a segment in situ. Figure 12a shows the kit disassembled, figure 12b shows the kit after assembling.

In the method for erecting a pole in accordance with the invention a first segment (2) is positioned in a non-upright position or upright position, a second segment (3) is attached to the first segment (2) at or near a free end (5) of the first segment (2) in such manner that the first and second segment are connected to each other via a pivot point (4), whereby, seen from the pivot point (4) the second segment comprises a first part (7) and a second part (8), said parts extending along the longitudinal direction (y) at opposite sides of the pivot point (4), the second segment being provided with a transversal part (9), extending in a direction perpendicular to the longitudinal direction and attached to the second segment at or near the pivot point (4), the first part and the transversal part having at their free ends (10, 11) cables (12) attached to it, the first segment is tilted if not already in up-right position, the second segment is pivoted around the pivot point by means of said cables, first exerting force at the free end of the first part (7), followed by exerting force on the free end of the transversal part (9) until the first part (7) abuts the first segment (2), whereafter the combination comprising the two segments is secured.

Preferably this procedure is repeated with a third and fourth and further segments. This method allows construction of sturdy yet relatively light-weight and high poles without the need of heavy equipment and without the risk, or at least with a strongly reduced risk, of buckling of the pole.

The great advantage of the invention can be seen when it is realized that:
- During construction, although the height of pole will be roughly 7 times the length of a segment, the maximum dimension Lmax is very limited slightly more than the length of a segment, thus allowing construction in places where there is little room such as mountainous terrain
- No heavy equipment such as cranes is required, which is of great advantage in third world countries but equally so in developed countries, especially in difficult terrain.
- The maximum size of the components (segments, cables etc.) is relatively small, which enables such construction to be made almost anywhere, also, since the weight of each component is relatively small, the pole can be erected at almost any spot, if need be simple transportation means (even handpower) can be used to bring the components at the construction site
- The maximum force required for pivoting the segments is always relatively small, since the force moments to be overcome during pivoting are relatively small. This also allows the use of relatively simple jacks, even hand jacks to do the job.
- It is not necessary (although it could be done of course) to start construction with laying a heavy and complicated foundation. As the pole is erected concrete blocks can be used as foundation blocks 51, adding more foundation blocks when needed.
- Repair and overhaul of whatever device is put on top of the pole is relatively simple, in this example the steps of figures 11 to 7 are simple repeated in reversed order, whereafter the wind turbine is repaired or checked, and the pole is erected again. Note that the lower parts of the pole will not be effected in any way by such a repair procedure.
- Adding an extra segment is simple, again the step of figures 11 to 7 are repeated in reverse order, whereafter a segment is added, as well as extra foundation blocks, and the pole is erected again. This allows construction of for instance a pole on which a wind turbine is mounted, for a particular wattage, while still having the possibility of increasing the wattage (by using a more powerful wind turbine at a higher pole) without much extra costs.

It will be clear that within the concept of the invention many variations are possible.

For instance, the first part abutting the first segment extends in a direction generally opposite to the second part. At the free end of this first part the cables are connected. There may be formed a relatively small protrusion extending transverse to this first part at which the cables are connected.

In short the invention can be characterised as follows:

A segmented pole comprises a number of segments (2, 3), each (apart from the bottom one), being connected to a lower segment (2) at a pivot point (4) which joins two segments (2,3), each segment having two oppositely from the pivot point arranged parts (7, 8). Each segment also has a transversal part (9) extending transverse to the longitudinal direction of the segment. To the outer ends of one of the parts (7,8) and the transversal part (9) cables are connectable (or connected). Such a construction in particular when the arrangement comprises four or more segment allows to erect a segmented pole with little forces by erecting the pole segment by segment, while subsequent segment are attached.

## Claims

1. Segmented pole comprising an arrangement (1) of at least one, lower, longitudinal segment (2) and a further, upper, second longitudinal segment (3), the second longitudinal segment being positioned on top of the first longitudinal segment, **characterised in that** the first and second segment of the arrangement are joined at a joining pivot point (4) situated at or near a free end (5) of the first longitudinal segment and at a intermediate point (6) of the second longitudinal segment, whereby, seen from the pivot point (4) the second segment comprises a first part (7) and a second part (8), said parts extending along a longitudinal direction (y) of the segments at opposite sides of the pivot point (4), the first part (7) in upright position abutting the first segment (2), the second segment then extending upwards from the first segment, the second segment being provided with a transversal part (9), extending in a direction perpendicular to the longitudinal direction and attached to the second segment at or near the pivot point (4), the first part and the transversal part having at their free ends (10, 11) means for attaching cables to it.

2. Segmented pole as claimed in claim 1, **characterised in that** the pole arrangement comprises of more than two segments, preferably four or more segments, wherein each segment is joined with a further segment at a pivot point as described above.

3. Segmented pole as claimed in claim 1 or 2, **characterised in that** the segments have a length of between 3 to 9 meters.

4. Segmented pole as claimed in Claim 1, 2 or 3, **characterised in that** the length (l₇) of the first part lies between 1/10th and half of the length (l₈) of the second part. (l₈/10<l₇<l₈/2)

5. Segmented pole as claimed in any of the preceding claims, **characterised in that** the length of the transversal part (l₉) lies between half of the length (l₇) of the first part and the length of the first part (l₇/2<l₉<l₇).

6. Segmented pole as claimed in any of the preceding claims, **characterised in that** the pole comprises an arrangement of more than two segments.

7. Segmented pole as claimed in claim 6, **characterised in that** the pole comprises four or more segments.

8. Kit for a segment for a pole in accordance with any of the preceding claims comprising a first part (7) attached to a second part (8), a transversal part (9) and transversal parts (61) to be attached to the second part (8), cables (62) to by arranged between the transversal parts (9) and (61) and cables (63) to be arranged between the free ends of the transversal parts and the second part (8).

9. Method for erecting a pole **characterised in that** a first segment (2) is positioned in a non-upright position or upright position, a second segment (3) is attached to the first segment (2) at or near a free end (5) of the first segment (2) the first and second segment being connected to each other via a pivot point (4), whereby, seen from the pivot point (4) the second segment comprises a first part (7) and a second part (8), said parts extending along the longitudinal direction (y) at opposite sides of the pivot point (4), the second segment being provided with a transversal part (9), extending in a direction perpendicular to the longitudinal direction and attached to the second segment at or near the pivot point (4), the first part and the transversal part having at their free ends (10, 11) cables (12) attached to it, the first segment is tilted if not already in upright position, the second segment is pivoted around the pivot point by means of said cables, first exerting force at the free end of the first part (7), followed by exerting force on the free end of the transversal part (9) until the first part (7) abuts the first segment (2), whereafter the combination comprising the first and second segment is secured.

10. Method as claimed in claim 9, **characterised in that** prior to completion of pivoting of the second segment, a third segment (31) is attached to the second segment via a pivot point (32), the third segment having a first part and a second part, said parts extending along the longitudinal direction (y) at opposite sides of the pivot point (32) said segment also being provided with a transversal part, extending in a direction perpendicular to the longitudinal direction of said segment and attached to the second segment at or near the pivot point (32), the first part and the transversal part of the third segment having at their free ends cables attached to it, whereafter, after completion of tilting of the second segment and securing of first and second segment, the third segment (31) is pivoted around the pivot point by means of said cables, first exerting force at the free end of the first part, followed by exerting force on the free end of the transversal part until the first part of the third segment abuts the second segment, whereafter the combination comprising the first, second and third segments is secured.
